# EUROPÄISCHE PATENTSCHRIFT

(11) **EP 3 230 233 B1**
(45) Veröffentlichungstag und Bekanntmachung des Hinweises auf die Patenterteilung: **05.06.2019**
(21) Anmeldenummer: 15816112.5
(22) Anmeldetag: 10.12.2015
(51) Int. Cl.: C04B 35/597, C04B 35/645, F02B 37/18

(54) **ALPHA/BETA-SIALON MIT VERBESSERTER SINTERAKTIVITÄT UND HOHER KANTENBESTÄNDIGKEIT**
ALPHA/BETA-SIALON HAVING IMPROVED SINTERING ACTIVITY AND HIGH EDGE STRENGTH
ALPHA/BETA-SIAION À ACTIVITÉ DE FRITTAGE ET SOLIDITÉ DES ARÊTES AMÉLIORÉES

(30) Priorität: 12.12.2014 DE 102014018283; 18.11.2015 DE 102015222790
(43) Veröffentlichungstag der Anmeldung: 18.10.2017
(73) Patentinhaber: CeramTec GmbH, 73207 Plochingen (DE)
(72) Erfinder: DIETRICH, Volker, 68305 Mannheim (DE); STAHL, Moritz, 72669 Unterensingen (DE); FRIEDERICH, Kilian, 73207 Plochingen (DE); RICHTER, Gert, 75203 Königsbach-Stein (DE)
(74) Vertreter: Fehrenbacher, Eckhard Anton
(86) Internationale Anmeldenummer: PCT/EP2015/079247
(87) Internationale Veröffentlichungsnummer: WO 2016/092016

(56) Entgegenhaltungen:
- EP-A1- 0 171 444
- WO-A1-2014/003150
- JP-A- H06 305 837
- JP-A- S63 303 865
- US-A- 4 407 970
- US-A- 4 975 395

## Beschreibung

Die Erfindung betrifft Werkstoffe auf Basis von α/β-Sialon. Insbesondere betrifft die Erfindung Werkstoffe auf Basis von α/β-Sialon mit einer verbesserten Sinteraktivität und einer hohen Kantenbeständigkeit der aus den Werkstoffen gefertigten Sinterformkörper.

Sinterformkörper aus α/β-Sialon, insbesondere zur Verwendung als Schneidwerkzeug, z.B. als Schneidplatte, sind aus dem Stand der Technik bekannt. Die Mischung aus α-Sialon und β-Sialon ermöglicht die Herstellung von Sinterformkörpern, die einerseits eine hohe Härte aufgrund des körnigen α-Sialons aufweisen. Andererseits besitzen die Sinterformkörper aber auch eine gute Zähigkeit aufgrund der nadelförmigen β-Sialon-Körner.

Für die Verwendung als Schneidwerkzeug ist es neben einer ausreichenden Härte und Zähigkeit erforderlich, dass der Werkstoff auch temperaturbeständig ist, da es beim Zerspanen insbesondere von Grauguss oder Nickel-Basis-Legierungen (Superalloys) und hier besonders im kontinuierlichen Schnitt, lokal zu einer sehr starken Erwärmung des Schneidwerkzeugs kommen kann. Viele oxidische Sinterhilfsmittel, die nach der Sinterung des Werkstoffs im Wesentlichen in der Glasphase vorliegen, haben jedoch nur eine vergleichsweise geringe Temperaturbeständigkeit und eine geringe Wärmeleitfähigkeit. Daher kommt es lokal schnell zur Überhitzung und die Glasphase erweicht. Durch die Temperatureinwirkung kann es darüber hinaus zu einer Oxidation anderer Bestandteile kommen, die zu einem vorzeitigen Ausfall des Schneidwerkzeugs führen können, beispielsweise durch von der Schneidkante ausgehende Abplatzungen, sprunghaft erhöhtem abrasivem Verschleiß oder Oxidation der anderen Bestandteile (Si₃N₄, Sialon oder TiN).

Wird das Schneidwerkzeug im unterbrochenen Schnitt verwendet, sind die Temperaturen geringer als im kontinuierlichen Schnitt. Die Schneidplatte ist nicht ständig im Kontakt mit dem Werkstück, so dass es immer wieder ein wenig abkühlen kann. Beim unterbrochenen Schnitt sollten aber die Risszähigkeit und die Kantenstabilität vergleichsweise hoch sein, da die mechanische Belastung viel größer ist als beim kontinuierlichen Schnitt.

α/β-Sialone mit Enddichten größer 99 % der theoretischen Enddichte werden derzeit entweder bei Temperaturen über 1750°C und gleichzeitig erhöhtem Stickstoffpartialdruck gesintert oder mit großen Mengen oxidischer Additive drucklos verdichtet.

Das Sintern unter erhöhtem Stickstoffpartialdruck erfordert ein geschlossenes Ofensystem und, im Vergleich mit den drucklos gesinterten Sialonen, mehr Energie und Gas (Stickstoff). Aus diesen Gründen ist eine drucklose Verdichtung z.B. unter Stickstofffluss bei Temperaturen kleiner 1750°C grundsätzlich wirtschaftlicher als das Gasdrucksintern.

Da Art und Menge der oxidischen Additive jedoch die Hochtemperatureigenschaften der Sialon-Keramik bestimmen, wird bei drucklos verdichteten Sialonen ein, im Vergleich mit den gasdruckgesinterten Sialonen, erhöhter Verschleiß bei Hochtemperaturanwendungen, wie z.B. beim Zerspanen von Grauguss beobachtet.

Dokument WO2014003150 weist ein alpha/beta-Sialonsinterformkörper auf, mit 60-90 Vol.% alpha-Sialon. Weiterhin kann TiO₂ zugefügt werden. Das TiO₂ wird während der Sinterung in TiN umgesetzt. Es wird bei 1750°C 10 Stunden in Stickstoff bei 1 MPa gesintert. Der alpha/beta-Sialonsinterformkörper wird als Verschleisskomponent verwendet.

Dokument US4975395 zeigt einen Sialonwerkstoff mit einer Korngrenzphase, die in situ gebildete TiN-Körner enthält. Der Werkstoff wird als Schneidwerkzeug verwendet.

Dokument JPS63303865 zeigt die Herstellung von beta-Sialon, ausgehend von einer Mischung von Si₃N₄, Al₂O₃, AlN, Y₂O₃ und TiO₂.

Dokument EP0171444 weist eine Ausgangsmischung zur Herstellung von Sialon von 89,5 Gew.-% Si₃N₄, 6,0 Gew.-% Y₂O₃, 4,3 Gew.-% AIN und 0,2 Gew.-% TiO₂ auf. Diese Mischung wird in Stickstoff bei 1690°C während 3 Stunden gesintert. Die Dichte der Sinterformkörper ist 99,4%. Der gesinterte Körper enthält kein alpha-Sialon.

Dokument JPH06 305837 zeigt einen Sialonformkörper mit einer Korngrenzphase die TiN-Körner enthält. Die TiN-Phase wird durch Nitridierung von TiO₂-Partikeln während der Sinterung gebildet. Eine Mischung von 93 Gew.-% Si₃N₄, 4,0 Gew.-% Y₂O₃, 2 Gew.-% Al₂O₃₃, 1 Gew.-% MgO und 0,3 Vol.-% TiO₂ wurde bei 1600°C in Stickstoff gesintert. Der resultierende Formkörper hatte eine Dichte von 99,3% und enthielt 17 Vol.-% alpha-Sialon gegen 83 Vol.-% beta-Sialon. Der Werkstoff wird als Schneidwerkzeug verwendet. Erst wird drucklos gesintert, aber danach bei 1000 Atmosphäre.

Dokument US4407970 weist eine Mischung von Pulvern auf, enthaltend 87,25 Gew.-% Si₃N₄, 5 Gew.-% Y₂O₃, 3,5 Gew.-% Al₂O₃, 3,5 Gew.-% AlN, 0,25 Gew.-% CaO, 0,25 Gew.-% Li₂O und 0,25 Gew.-% TiO₂. Diese Mischung wurde zu einem Grünkörper geformt und bei 1750°C unter fließendem Stickstoffgas gesintert. Der resultierende Sinterformkörper hatte eine Dichte von 99,8%.

Die Aufgabe der Erfindung besteht daher darin, eine Sialon-Keramik bereitzustellen, die auch bei hohen Temperaturen verschleißbeständig und trotzdem wirtschaftlich herstellbar ist. Außerdem soll ein Verfahren zur Herstellung dieser Sialon-Keramik bereitgestellt werden.

Die Aufgabe wird durch ein geeignetes Additivsystem gelöst, das zum einen eine ausreichende Verdichtung beim drucklosen Sintern gewährleistet und zum anderen den Sauerstoffanteil im System nicht zu sehr erhöht. Dadurch kann entweder das Verschleißverhalten von drucklos gesinterten Sialonen auf das Niveau von gasdruckgesinterten gehoben, oder die Eigenschaften der gasdruckgesinterten Sialone weiter verbessert werden.

Überraschend zeigte sich, dass die Aufgabe mittels einer Zugabe eines Oxids des Elements Titan, nämlich mit Titandioxid (TiO₂), als Sinteradditiv gelöst werden kann. Titandioxid wandelt sich beim Sintern unter Stickstoffatmosphäre im Wesentlichen vollständig, also zu mindestens 95% in TiN um.

Diese Lösung der gestellten Aufgabe ist tatsächlich als überraschend zu bewerten, da nach Petzow & Herrmann (High Performance Non-Oxide Ceramics II, 47-167 (2002)) Sinteradditive für Sialon-Keramiken unter Sinterbedingungen stabile Oxide sein sollen, die nicht zur Zersetzung des Si₃N₄ unter Bildung von Additiv-Nitriden und SiO₂ führen. TiO₂ wird in diesem Zusammenhang explizit als Negativbeispiel aufgeführt, vgl. z.B. S. 81.

Zusätzlich zu dem genannten Sinteradditiv werden in einem erfindungsgemäßen Verfahren zur Herstellung eines Sinterformkörpers aus α-/β-Sialon mit einer Korngrenzphase, die zumindest einen in situ gebildeten Hartstoff umfasst, ein Ausgangsmaterial verwendet, das zumindest die folgenden Verbindungen umfasst: α-Si₃N₄, AIN und ggf. Al₂O₃ sowie zumindest ein weiteres Sinteradditiv ausgewählt aus Sauerstoff-Verbindungen der Elemente der Seltenen Erden. Bevorzugt sind Oxide der Elemente Ytterbium, Erbium, Dysprosium, Yttrium, Scandium, Cer.

Die Verwendung von TiO₂ als Sinteradditiv ist überraschenderweise möglich, wenn die Zugabe des für Sialone obligatorischen Aluminiums im Wesentlichen in Form von Aluminiumnitrid (AlN), in einem Gewichtsverhältnis AlN : Al₂O₃ von größer als 4 : 1, bevorzugt größer als 10 : 1, besonders bevorzugt größer als 50 : 1, erfolgt. Versuche haben gezeigt, dass wenn das Verhältnis AlN/Al₂O₃ kleiner als 4 : 1 ist, α-Sialon nicht ausreichend stabilisiert wird. Darüber hinaus nimmt der Sauerstoffanteil in der Korngrenzphase zu, was die Hochtemperatureigenschaften des Sinterformkörpers negativ beeinflusst. Durch Zugabe von TiO₂ und AlN, wird der eutektische Punkt im System zu niederen Temperaturen hin verschoben. Es bildet sich eine eutektische Schmelzphase. Diese Schmelzphase ermöglicht es darüber hinaus, den expliziten Additivgehalt zu reduzieren und trotzdem eine ausreichende Verdichtung auch beim drucklosen Sintern zu erreichen.

Keramische Bauteile, die mit TiO₂ als Sinteradditiv hergestellt wurden, zeigen weniger Verzug und eine bessere Verdichtung als Bauteile, die mit herkömmlichen Sinteradditiven wie beispielsweise größeren Mengen AlN, CaCO₃ oder Oxiden der Seltenen Erden verdichtet wurden.

Der α-Si₃N₄-Rohstoff löst sich während des Verdichtungsprozesses (Sintern) in der oben genannten Schmelzphase. Beim Überschreiten der Löslichkeitsgrenze bilden sich elongierte β-Sialon-Nadeln und globulare, durch Seltene Erden stabilisierte α-Sialon-Körner. Dabei werden Al³⁺-Ionen vom zugegebenen AlN an Stelle der Si⁴⁺-Ionen in das Si₃N₄-Kristallgitter eingebaut. Beim β-Sialon muss, aus Gründen der Ladungsneutralität, für jedes eingebaute Al³⁺-Ion ein N³⁻-Ion durch ein O²⁻-Ion ersetzt werden. Beim α-Sialon werden, zusätzlich zu den Al³⁺-Ionen, große Kationen (meist SEE³⁺-Ionen) in das Kristallgitter eingebaut, um die α-Sialon-Modifikation zu stabilisieren. Der Ladungsausgleich erfolgt hier ebenfalls durch den Einbau von O²⁻-Ionen. Durch diesen Austausch von N³⁻ zu O²⁻ wird die Konzentration der N³⁻-Ionen in der Schmelze erhöht und die Konzentration der O²⁻-Ionen verringert. Da stickstoffhaltige Korngrenzphasen die Viskosität und die Erweichungstemperatur erhöhen, führt dies zu einer erhöhten Temperaturbeständigkeit der Sinterformkörper.

TiO₂ ist im Sinterformkörper mittels Röntgendiffraktometrie nicht mehr nachweisbar. Im Sinterformkörper liegen die restlichen, nicht in die Sialon-Kristallstruktur eingebauten und/oder in Hartstoff umgewandelten Sinterhilfsmittel in Form einer amorphen und/oder teilkristallinen Korngrenzphase vor.

Eine weitere wichtige Eigenschaft von technischer Keramik, insbesondere bei Verschleißanwendungen wie im Falle der Schneidstoffe, ist die Kantenbeständigkeit gegen Abplatzung R_{eA}. Die Kantenbeständigkeit wurde im Wesentlichen nach Verfahren A der DIN CEN/TS 843-9:2010-11-01 bestimmt. Abweichend zu DIN CEN/TS 843-9:2010-11-01 wurde zum Einen eine Prüfmaschine mit einer Genauigkeit von 2,5 % der angezeigten Kraft verwendet, zum Anderen wurden die Proben nicht mit einer Aufspanneinrichtung in unveränderlicher Lage gehalten, sondern, bis auf einem Kantenanschlag, frei beweglich geprüft. Für die Bestimmung der Kantenbeständigkeit wurden Wendeschneidplatten der Geometrie SNMX 120716 T02020 verwendet. Der Eindruck zur Bestimmung der Kantenbeständigkeit erfolgte auf der Oberseite der Wendeschneidplatte, der so genannten Spanfläche. Der Umfang der Wendeschneidplatten wurde nicht hartbearbeitet, war also im so genannten as fired-Zustand. Der kürzeste Abstand vom Umfang der Wendeschneidplatte bis zum Eindruck des verwendeten Diamanten mit Rockwell-Geometrie wurde nach der Bestimmung der Abplatzkraft an einem Lichtmikroskop gemessen. Je höher die Kantenbeständigkeit, desto höher kann die Schnittgeschwindigkeit bei gleichbleibender Schnitttiefe und gleichbleibendem Vorschub gewählt werden. Dies trifft insbesondere für den unterbrochenen Schnitt zu, da hier die Schneidkeramik hinsichtlich der Kantenstabilität wiederholt beansprucht wird. Gemäß einer besonders bevorzugten Weiterbildung der Erfindung weist der Sinterformkörper daher eine Kantenbeständigkeit von mindestens 600 N/mm auf. Bevorzugt liegt die Kantenbeständigkeit des erfindungsgemäßen Sinterformkörpers im Bereich von 650 bis 2000 N/mm, besonders bevorzugt im Bereich von 900 bis 1300 N/mm.

Ein erfindungsgemäßer Sinterformkörper wird aus folgenden Ausgangsstoffen hergestellt : 70 bis 96 Gew.-% Si₃N₄, 3 bis 15 Gew.-% von mindestens einem Oxid der Seltenen Erden, wie Y₂O₃, 1 bis 15 Gew.-% einer Aluminiumverbindung, umfassend AlN und ggf. Al₂O₃ sowie 0,1 bis 3 Gew.-% TiO₂. Eine weitere Zusatz ist CaCO₃. Die Summe der Ausgangsstoffe ergibt jedoch immer 100 Gew.-%.

Eine besonders bevorzugte Ausführungsform der Erfindung weist ein Ausgangsmaterial aus 78 bis 95 Gew.-% Si₃N₄, 2 bis 8 Gew.-% AIN, 0 bis 1,2 Gew.-% Al₂O₃, 2,5 bis 6,5 Gew.-% Y₂O₃ oder 3,3 bis 12 Gew.-% Yb₂O₃ oder eine entsprechende Mischung aus beiden, 0,08 bis 0,22 Gew.-% CaCO₃ und 0,25 bis 2,0 Gew.-% TiO₂ auf, wobei die Summe der Ausgangsstoffe 100 Gew.-% ergibt.

Wie bereits oben angedeutet, können aus dem Ausgangsmaterial geformte Grünkörper drucklos oder gasdruckgesintert werden. Werden die Grünkörper drucklos gesintert, besteht ein Vorteil der Erfindung darin, dass durch die Zugabe eines Oxids des Elements Titan die Sinteraktivität und damit die Enddichte der Sinterformkörper erhöht werden kann, ohne die absolute Menge an zugegebenen Sinteradditiven erhöhen zu müssen. Dadurch können die Eigenschaften der drucklos gesinterten Varianten auf das Niveau der Eigenschaften der gasdruckgesinterten Varianten angehoben werden, jedoch mit weit geringeren Kosten. Daher wird erfindungsgemäss drucklos gesintert.

Besonders bevorzugt werden die beschriebenen Sinterformkörper als Schneidwerkzeug, insbesondere als Schneidplatte, als Verschleiß-Komponente, beispielsweise als Schweißrolle, Schweißzentrierstifte, Komponenten für Lager (Wälz- oder Kugellager), Komponenten im Abgasstrang (Abgasklappen), Ventile oder Abgasturbolader verwendet.

Im Folgenden wird die Erfindung anhand eines Ausführungsbeispiels im Vergleich mit einem herkömmlich zusammengesetzten Sinterformkörper näher erläutert.

Die Ausgangsmaterialien, siehe Tab. 1, wurden vermischt und ein grüner Formkörper hergestellt. Der Formkörper wurde bei 1725°C für ca. zwei Stunden unter fließendem Stickstoff drucklos gesintert.

**Tab. 1**

| Ausgangsmaterial | Beispiel A (Vergleichsbeispiel) | Beispiel B (erfindungsgemäß) | Beispiel C (erfindungsgemäß) |
|---|---|---|---|
| Si₃N₄ (Gew.-%) | 84 - 93 | 82 - 92 | 75 - 88 |
| Al₂O₃ (Gew.-%) | 0 - 1,2 | 0 - 1,2 | 0 - 1,2 |
| AIN (Gew.-%) | 3 - 8 | 3 - 8 | 3 - 8 |
| Er₂O₃ (Gew.-%) | -------- | 0 - 1,2 | -------- |
| Y₂O₃ (Gew.-%) | 4,5 - 6,5 | -------- | 0 - 1,2 |
| Yb₂O₃ (Gew.-%) | -------- | 8,5 - 12,5 | 8,5 - 12,5 |
| CaCO₃ (Gew.-%) | 0,08 - 0,22 | 0,08 - 0,22 | 0,08 - 0,22 |
| TiO₂ (Gew.-%) | --------- | 0,25 - 2 | 0,25 - 2 |
| % theoret. Dichte | 96,36 - 97,13 | 99,18 - 99,97 | 99,34 - 99,98 |
| Vickers Härte HV10 (GPa) | 5,5 | 16,6 | 16,7 |
| α-Sialon-Anteil an der as fired Oberfläche des Sinterformkörpers (Vol.%) | 77 | 75 | 86 |
| α-Sialon-Anteil im Inneren des Sinterform-körpers (Vol.%) | 64 | 55 | 54 |
| Risszähigkeit (Palmquist) K_{Ic} (GPa*m^{0,5}) | Nicht auswertbar, da aufgrund der hohen Restporosität keine Risse erkennbar sind | 6,6 | 6,5 |
| Kantenbeständigkeit R_{eA} (N/mm) | Nicht auswertbar, da Teile zu porös und verzogen sind | 1054,97 | 946,33 |

Die erfindungsgemäßen Beispiele und das Vergleichsbeispiel unterscheiden sich lediglich in der Zusammensetzung bzw. den eingesetzten Materialien. Die erfindungsgemäßen Beispiele weisen einen TiO₂-Anteil auf; die Mengen der übrigen Komponenten wurden entsprechend angepasst. Verfahrensparameter, wie Formgebung und Sinterbedingungen, waren bei den Beispielen ansonsten identisch.

In allen Fällen ergab sich ein α-/β-Sialon-Sinterformkörper mit einer Korngrenzphase, die neben amorphen Anteilen auch kristalline Anteile im Röntgendiffraktogramm aufweist. Der Sinterformkörper der erfindungsgemäßen Beispiele enthielt darüber hinaus noch in situ gebildete TiN-Körner.

Hinsichtlich der Eigenschaften zeigt sich, dass die erfindungsgemäßen Beispiele eine um etwa 3% höhere relative Dichte aufweisen, als das Vergleichsbeispiel. Diese hohe relative Dichte zeigt sich auch in den exzellenten Ergebnissen, die für die Vickers Härte HV10 und die Risszähigkeit erhalten werden. Die Vickers Härte HV10 beträgt für einen erfindungsgemäßen Sinterformkörper demgemäß zumindest 10 GPa, bevorzugt zumindest 15 GPa. Die Risszähigkeit nach Palmquist beträgt für einen erfindungsgemäßen Sinterformkörper demnach zumindest 5 MPa*m^{0,5}, bevorzugt zumindest 6 MPa*m^{0,5}.

Für Vergleichsbeispiel A konnten Risszähigkeit und die Kantenbeständigkeit nicht bestimmt werden, weil der Rissverlauf aufgrund der hohen Restporosität nicht eindeutig zu erkennen war. Der Versuch zur Kantenbeständigkeit konnte nicht ausgewertet werden, da die Schneidplatten zu porös und darüber hinaus verzogen waren.

Im gesinterten Zustand des Werkstoffs besteht die Sialon-Phase des Sinterkörpers im Innern aus einem Anteil an α-Sialon von 20 bis 70 Vol%, bevorzugt 30 bis 60 Vol.% und einem Anteil von β-Sialon 80 bis 30 Vol%, bevorzugt 70 bis 40 Vol.% β-Sialon. Der Anteil von α- und β-Sialon wird anhand röntgendiffraktometrischer Aufnahmen bestimmt (nach Gazzara and Messier, J. Am. Ceram. Soc. Bull. 56 (1977)).

Die Zusammensetzung des Werkstoffs im Inneren eines Sinterformkörpers kann bekanntermaßen durch die Herstellungsparameter variiert werden wie beispielsweise durch die Zusammensetzung der Pulvermischung, den Sinterbedingungen im Ofen, das Tiegelmaterial, die Gasart, die Temperatur und die Sinterzeit. Im Sinterformkörper kann ein Gradient zwischen Sinterkörper-Oberfläche und -Innerem vorhanden sein, so dass die sogenannte as fired-Oberfläche bis zu 100% α-Sialon enthält.

Die Oberfläche des Sinterformkörpers im gesinterten Zustand weist einen Anteil an α-Sialon bzgl. der gesamten Sialon-Phase von 55 bis 95 Vol.%, bevorzugt von 60 bis 90 Vol.% und einen Anteil an β-Sialon von 5 bis 45 Vol.%, bevorzugt von 10 bis 40 Vol.% auf.

Die Oberfläche des Sinterformkörpers im gesinterten Zustand weist bevorzugt einen um 5 bis 65 Vol.%, vorzugsweise um 10 bis 55 Vol.%, besonders bevorzugt um 15 bis 50 Vol.% höheren Anteil an α-Sialon bzgl. der gesamten Sialon-Phase im Vergleich zu dem Anteil an α-Sialon bzgl. der gesamten Sialon-Phase im Inneren des Sinterkörpers auf.

Ein Gradient im Sinterformkörper kann unter bestimmten Bedingungen entstehen, wenn die Oberfläche des Sinterkörpers schneller abkühlt als das Innere oder die Oberfläche in ihrer chemischen Zusammensetzung durch Reaktionen mit der Atmosphäre verändert wird. Eine α-Sialon-reiche Oberfläche führt zu einer harten Außenschicht mit einem zähen Kern. Somit kann die Härte des Sinterformkörpers an der Oberfläche, zusätzlich zum in situ gebildeten Hartstoff, weiter gesteigert werden ohne die hohe Kantenbeständigkeit des planbearbeiteten und gefasten Sinterrohlings zu verringern.

Der erfindungsgemäße Werkstoff kann mit den bekannten verschleißreduzierenden Schichten wie z.B. Al2O3, TiN, TiC oder Ti(C,N) beschichtet sein, was die Verschleißbeständigkeit erhöht.

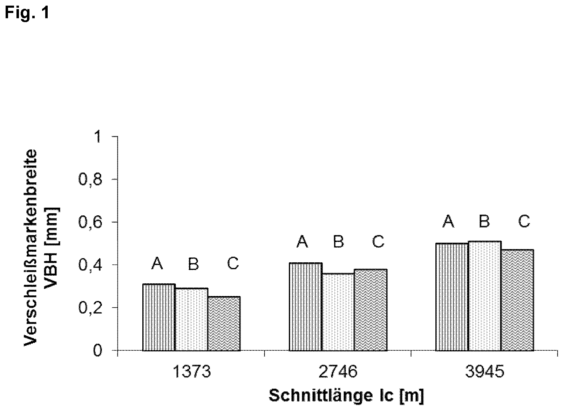

Figur 1 zeigt die Ergebnisse des Verschleißtests für ein gasdruckgesintertes Vergleichsbeispiel A und die erfindungsgemäßen Ausführungsformen B und C, die drucklos gesintert wurden, wie oben beschrieben. Aufgetragen ist die Breite der Verschleißmarke in Millimetern in Abhängigkeit von der Schnittlänge in Metern beim unterbrochenen Schnitt in Grauguss (GJL 150). Der Verschleißtest wurde bei einer Schnittgeschwindigkeit von 1000 m/min, einem Vorschub von 0,50 mm/U und einer Schnitttiefe von 2 mm durchgeführt.

Bei gleicher Schnittlänge zeigt sich, dass die drucklos gesinterten Ausführungsformen der Erfindung B und C vergleichbare oder sogar bessere Verschleißwerte aufweisen als das Vergleichsbeispiel A.

## Patentansprüche

1. Verfahren zur Herstellung eines Sinterformkörpers aus α/β-Sialon mit einer Korngrenzphase, umfassend zumindest den Hartstoff TiN, **dadurch gekennzeichnet, dass** als Ausgangsmaterial nur 70 bis 96 Gew.-% Si₃N₄, 1 bis 15 Gew.-% einer Aluminiumverbindung umfassend AIN und ggf. Al₂O₃, wobei das Verhältnis von eingesetztem AIN zu ggf. eingesetztem Al₂O₃ größer als 4 : 1 ist, 3 bis 15 Gew.-% von mindestens eines Oxid der seltenen Erden, wie Y₂O₃ und 0,1 bis 3,0 Gew.-% TiO₂, und CaCO₃ eingesetzt werden, wobei die Summe der Ausgangsstoffe 100 Gew.-% entspricht und der aus dem Ausgangsmaterial geformte Körper drucklos gesintert wird.

2. Verfahren nach Anspruch 1, wobei der Körper drucklos unter fließendem Stickstoff bei 1725°C für ca. zwei Stunden gesintert wird und als Ausgangsmaterialien 75 bis 92 Gew.-% Si₃N₄, 3 bis 8 Gew.-% AIN, 0 bis 1,2 Gew.-% Al₂O₃, 0 bis 1,2Gew.-% Y₂O₃ oder Er₂O₃, 8,5 bis 12,5 Gew.-% Yb₂O₃, 0,08 bis 0,22 Gew.-% CaCO₃ und 0,25 bis 2,0 Gew.-% TiO₂ eingesetzt werden.

3. Verfahren gemäß einem der Ansprüche 1 oder 2, **dadurch gekennzeichnet, dass** das Verhältnis AIN zu ggf. zugefügten Al₂O₃ größer 10:1, bevorzugt größer 50:1 ist.

4. Sinterformkörper, umfassend eine Keramik aus α-/β-Sialon mit einer Korngrenzphase, und die Korngrenzphase den in situ gebildeten Hartstoff TiN als zusätzliche Phase enthält, wobei als Ausgangsmaterial nur 70 bis 96 Gew.-% Si₃N₄, 1 bis 15 Gew.-% einer Aluminiumverbindung umfassend AIN und ggf. Al₂O₃, wobei das Verhältnis von eingesetztem AIN zu ggf. eingesetztem Al₂O₃ größer als 4 : 1 ist, 3 bis 15 Gew.-% von mindestens eines Oxid der seltenen Erden, wie Y₂O₃ und 0,1 bis 3,0 Gew.-% TiO₂, und CaCO₃ eingesetzt werden, wobei die Summe der Ausgangsstoffe 100 Gew.-% entspricht und wobei im gesinterten Zustand im Innern des Sinterkörpers der Anteil an α-SiAlON bzgl. der gesamten Sialon-Phase 20 bis 70 Vol.%, beträgt und der Anteil an β-Sialon 80 bis 30 Vol.%, beträgt und die Oberfläche des Sinterkörpers im gesinterten Zustand einen Anteil an α-Sialon bzgl. der gesamten Sialon-Phase von 55 bis 95 Vol.% aufweist und der Anteil an β-Sialon 5 bis 45 Vol% beträgt und der Sinterformkörper eine Enddichte von zumindest 99% aufweist.

5. Sinterformkörper nach einem der vorstehenden Ansprüche, **dadurch gekennzeichnet, dass** der Sinterformkörper eine Kantenbeständigkeit von mindestens 600 N/mm, bevorzugt von mindestens 680 N/mm aufweist.

6. Sinterformkörper nach einem der vorstehenden Ansprüche, **dadurch gekennzeichnet, dass** im gesinterten Zustand im Innern des Sinterkörpers der Anteil an α-SiAION bzgl. der gesamten Sialon-Phase 30 bis 60 Vol.% beträgt und der Anteil an β-Sialon 70 bis 40 Vol.% beträgt.

7. Sinterformkörper nach einem der vorstehenden Ansprüche, **dadurch gekennzeichnet, dass** die Oberfläche des Sinterkörpers im gesinterten Zustand einen Anteil an α-Sialon bzgl. der gesamten Sialon-Phase von 60 bis 90 Vol.% aufweist und der Anteil an β-Sialon 10 bis 40 Vol.% beträgt.

8. Sinterformkörper nach einem der vorstehenden Ansprüche, **dadurch gekennzeichnet, dass** die Oberfläche des Sinterkörpers im gesinterten Zustand einen um 5 bis 65 Vol.%, vorzugsweise um 10 bis 55 Vol.%, besonders bevorzugt um 15 bis 50 Vol.% höheren Anteil an α-Sialon bzgl. der gesamten Sialon-Phase im Vergleich zu dem Anteil an α-Sialon bzgl. der gesamten Sialon-Phase im Inneren des Sinterkörpers aufweist.

9. Sinterformkörper nach einem der vorstehenden Ansprüche, **dadurch gekennzeichnet, dass** der Sinterformkörper eine Vickers Härte HV10 von zumindest 10 GPa, bevorzugt von zumindest 15 GPa und/oder eine Risszähigkeit K_{Ic} von zumindest 5 MPa*m^{0,5}, bevorzugt von zumindest 6 MPa*m^{0,5} aufweist.

10. Verwendung eines Sinterformkörpers nach einem der Ansprüche 4 bis 9 als Schneidwerkzeug, insbesondere als Schneidplatte, als Verschleiß-Komponente, insbesondere als Schweißrolle, Schweißzentrierstifte, Komponente von Lagern wie Wälz- oder Kugellagern, Komponenten im Abgasstrang wie Abgasklappen, Ventile oder Abgasturbolader.

## Claims

1. Method for producing a sintered molded body consisting of α/β sialon with a grain boundary phase, comprising at least the hard material TiN, **characterized in that** only 70 to 96 wt.% Si₃N₄, 1 to 15 wt.% of an aluminum compound comprising AIN and optionally Al₂O₃, the ratio of used AIN to optionally used Al₂O₃ being greater than 4:1, 3 to 15 wt.% of at least one rare-earth oxide, such as Y₂O₃ and 0.1 to 3.0 wt.% TiO₂, and CaCO₃ are used as a starting material, the sum of the starting substances amounting to 100 wt.% and the body molded from the starting material being sintered without pressure.

2. Method according to claim 1, wherein the body is sintered without pressure under flowing nitrogen at 1725°C for approximately two hours, and 75 to 92 wt.% Si₃N₄, 3 to 8 wt.% AlN, 0 to 1.2 wt.% Al₂O₃, 0 to 1.2 wt.% Y₂O₃ or Er₂O₃, 8.5 to 12.5 wt.% Yb₂O₃, 0.08 to 0.22 wt.% CaCO₃ and 0.25 to 2.0 wt.% TiO₂ are used as starting materials.

3. Method according to either claim 1 or claim 2, **characterized in that** the ratio of AIN to optionally added Al₂O₃ is greater than 10:1, preferably greater than 50:1.

4. Sintered molded body, comprising a ceramic material consisting of a-/ β-sialon with a grain boundary phase, and the grain boundary phase contains the hard material TiN formed in situ as an additional phase, wherein only 70 to 96 wt.% Si₃N₄, 1 to 15 wt.% of an aluminum compound comprising AIN and optionally Al₂O₃, the ratio of used AIN to optionally used Al₂O₃ being greater than 4:1, 3 to 15 wt.% of at least one rare-earth oxide, such as Y₂O₃ and 0.1 to 3.0 wt.% TiO₂, and CaCO₃ are used as a starting material, wherein the sum of the starting substances amounts to 100 wt.% and wherein, in the sintered state, within the sintered body the proportion of α-SiAION with respect to the total sialon phase is 20 to 70 vol.% and the proportion of β-sialon is 80 to 30 vol.%, and the surface of the sintered body in the sintered state has a proportion of α-sialon with respect to the total sialon phase of from 55 to 95 vol.% and the proportion of β-sialon is 5 to 45 vol.%, and the sintered molded body has a final density of at least 99%.

5. Sintered molded body according to any of the preceding claims, **characterized in that** the sintered molded body has a form stability of at least 600 N/mm, preferably of at least 680 N/mm.

6. Sintered molded body according to any of the preceding claims, **characterized in that**, in the sintered state, within the sintered body the proportion of α-SiAlON with respect to the total sialon phase is 30 to 60 vol.% and the proportion of β-sialon is 70 to 40 vol.%.

7. Sintered molded body according to any of the preceding claims, **characterized in that** the surface of the sintered body, in the sintered state, has a proportion α-sialon with respect to the total sialon phase of from 60 to 90 vol.% and the proportion of β-sialon is 10 to 40 vol.%.

8. Sintered molded body according to any of the preceding claims, **characterized in that** the surface of the sintered body, in the sintered state, has a proportion of α-sialon with respect to the total sialon phase that is higher by 5 to 65 vol.%, preferably by 10 to 55 vol.%, particularly preferably by 15 to 50 vol.%, in comparison with the proportion of α-sialon with respect to the entire sialon phase within the sintered body.

9. Sintered molded body according to any of the preceding claims, **characterized in that** the sintered molded body has a Vickers hardness HV10 of at least 10 GPa, preferably of at least 15 GPa and/or a fracture toughness K_{IC} of at least 5 MPa*M^{0.5,} preferably of at least 6 MPa*m^{0.5}.

10. Use of a sintered molded body according to any of claims 4 to 9 as a cutting tool, in particular as a cutting plate, as a wear component, in particular as a welding roller, welding centering pins, component of bearings such as roller bearings or ball bearings, or components in the exhaust gas system, such as exhaust flaps, valves or exhaustgas turbochargers.

## Revendications

1. Procédé de fabrication d'un corps fritté en α/β-sialon avec une phase de limite de grains, comprenant au moins du TiN dur, **caractérisé en ce que** l'on utilise, comme matière première, seulement 70 à 96 % en poids de Si₃N₄, 1 à 15 % en poids d'un composé d'aluminium comprenant de l'AlN et, le cas échéant, de l'Al₂O₃, le rapport d'AlN utilisé à l'Al₂O₃ utilisé étant supérieur à 4: 1, 3 à 15 % en poids d'au moins un oxyde de terre rare tel que Y₂O₃ et 0,1 à 3,0 % en poids de TiO₂ et de CaCO₃, dans lequel la somme des matériaux de base est égale à 100 % en poids et le corps formé à partir de la matière première est fritté sans pression.

2. Procédé selon la revendication 1, dans lequel le corps est fritté sans pression sous courant d'azote à 1 725 °C pendant environ deux heures, et les matières premières sont utilisées dans une proportion de 75 à 92 % en poids de Si₃N₄, de 3 à 8 % en poids d'AIN, de 0 à 1,2 % en poids d'Al₂O₃, de 0 à 1,2 % en poids de Y₂O₃ ou d'Er₂O₃, de 8,5 à 12,5 % en poids de Yb₂O₃, de 0,08 à 0,22 % en poids de CaCO₃ et de 0,25 à 2,0 % en poids de TiO₂.

3. Procédé selon l'une quelconque des revendications 1 ou 2, **caractérisé en ce que** le rapport d'AlN à l'Al₂O₃ ajouté le cas échéant est supérieur à 10:1, de préférence supérieur à 50:1.

4. Corps fritté comprenant une céramique α/β-sialon avec une phase de limite de grains, et la phase de limite de grains contenant du TiN dur formé par réaction in-situ en tant que phase supplémentaire, dans lequel l'on utilise, comme matière première, seulement 70 à 96 % en poids de Si₃N₄, 1 à 15 % en poids d'un composé d'aluminium comprenant de l'AlN et, le cas échéant, de l'Al₂O₃, le rapport d'AlN utilisé à l'Al₂O₃ utilisé étant supérieur à 4: 1, 3 à 15 % en poids d'au moins un oxyde de terre rare, tel que Y₂O₃ et 0,1 à 3,0 % en poids de TiO₂ et de CaCO₃, dans lequel la somme des matériaux de base est égale à 100 % en poids et dans lequel, à l'état fritté à l'intérieur du corps fritté, la proportion de α-SiAION par rapport à la phase sialon entière est de 20 à 70 % en volume et la proportion de β-sialon est de 80 à 30 % en volume, et la surface du corps fritté à l'état fritté présente une proportion d'a-sialon de 55 à 95 % en volume par rapport à la phase sialon entière, et la proportion de β-sialon est de 5 à 45 % en volume, et le corps fritté a une densité finale d'au moins 99 %.

5. Corps fritté selon l'une quelconque des revendications précédentes, **caractérisé en ce que** le corps fritté présente une stabilité de bords d'au moins 600 N/mm, de préférence d'au moins 680 N/mm.

6. Corps fritté selon l'une quelconque des revendications précédentes, **caractérisé en ce qu'**à l'état fritté à l'intérieur du corps fritté, la proportion d'α-sialon par rapport à la phase sialon entière est de 30 à 60 % en volume, et la proportion de β-sialon est de 70 à 40 % en volume.

7. Corps fritté selon l'une quelconque des revendications précédentes, **caractérisé en ce que** la surface du corps fritté, à l'état fritté, a une proportion d'α-sialon de 60 à 90 % en volume par rapport à la phase sialon entière, et la proportion de β-sialon est de 10 à 40 % en volume.

8. Corps fritté selon l'une quelconque des revendications précédentes, **caractérisé en ce que** la surface du corps fritté, à l'état fritté, présente 5 à 65 % en volume, de préférence 10 à 55 % en volume, de manière particulièrement préférée 15 à 50 % en volume d'une proportion plus importante d'a-sialon par rapport à la phase sialon entière en comparaison avec la proportion d'a-sialon par rapport à la phase sialon entière à l'intérieur du corps fritté.

9. Corps fritté selon l'une quelconque des revendications précédentes, **caractérisé en ce que** le corps fritté présente une dureté Vickers HV10 d'au moins 10 GPa, de préférence d'au moins 15 GPa et/ou une résistance à la rupture (K_{IC}) d'au moins 5 MPa*m^{0,5}, de préférence d'au moins 6 MPa*m^{0,5}.

10. Utilisation d'un corps fritté selon l'une des revendications 4 à 9, comme outil de coupe, en particulier une plaquette de coupe, comme composants d'usure, en particulier un galet de soudage, des goupilles de centrage pour le soudage, comme composants de roulement tels que des roulements à billes ou des paliers à roulement, comme composants de système d'échappement tels que des clapets de gaz d'échappement, des soupapes ou des turbocompresseurs à gaz d'échappement.
